# EUROPEAN PATENT APPLICATION

(11) **EP 2 942 280 A1**
(43) Date of publication of application: **11.11.2015**
(21) Application number: 14275103.1
(22) Date of filing: 07.05.2014
(51) Int. Cl.: B64D 37/06, B64D 37/08, B64D 37/32, F41H 5/04

(54) **Liquid storage system**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is a liquid storage system comprising a tank (16) for containing a liquid, said tank (16) enclosing a liquid storage space (14), and an assembly (18a, 18b) located within the tank (16) and configured to reduce the effects of hydrodynamic ram within the tank (16). The assembly (18a, 18b) comprises a plurality of flexible sheets (22a, 22b) of a material arranged as a stack of sheets, and attachment means (20a, 20b) for releasably attaching the stack of sheets (22a, 22b) to an internal surface of the tank (16). The flexible sheets (22a, 22b) may be made of a material comprising aramid or para-aramid fibres.

## Description

### FIELD OF THE INVENTION

The present invention relates to liquid storage systems.

### BACKGROUND

A high speed projectile on impact with and penetration into a liquid containing tank generates very high pressure in the liquid. This phenomenon, known as hydrodynamic ram, typically includes the generation of shock waves and subsequent pressure pulses in the liquid. These pressures, combined with the penetration damage from the projectile, can cause damage to the tank structure and frequently are the cause of catastrophic failure of the tank. The hydrodynamic ram pressure pulses are intense but of short duration which propagate through the liquid in the tank.

There is thus a need for means for reducing hydrodynamic ram pressure in the liquid in such a tank and for a generally improved tank which has an improved ability to sustain projectile impact without catastrophic failure.

### SUMMARY OF THE INVENTION

In a first aspect, the present invention provides a liquid storage system comprising a tank for containing a liquid, said tank enclosing a liquid storage space, and an assembly located within the tank and configured to reduce the effects of hydrodynamic ram within the tank. The assembly comprises a plurality of flexible sheets of a material arranged as a stack of sheets, and attachment means for releasably attaching the stack of sheets to an internal surface of the tank.

One or more of the flexible sheets, for example all of the flexible sheets, may be made of a material comprising aramid or para-aramid fibres. The aramid or para-aramid fibres may be poly-paraphenylene terephthalamide.

Each of the flexible sheets may have a thickness of less than 1mm, for example, less than 0.5mm.

The assembly may include at least 20 flexible sheets.

The attachment means may comprise one or more pins, each pin comprising a base portion for attachment to an internal surface of a wall of the tank, and a threaded elongate member passing through the plurality of flexible sheets.

The total cavity volume of the assembly in the tank may be less than or equal to 15% by volume of the tank volume.

The assembly may be arranged in the tank such that the plurality of flexible sheets is proximate to and substantially parallel with an internal surface of a wall of the tank.

The assembly may be arranged in the tank such that the stack of flexible sheets is substantially equidistant from two opposite walls of the tank.

The assembly may be configured such that at least part of a sheet becomes detached from the wall of the tank in response to the application of a load force to that sheet.

The assembly may be configured such that the sheets are free to move at least to some extent within the tank relative to each other and with respect to the walls of the tank without becoming detached from the walls of the tank.

The tank may be an aircraft fuel tank.

In a further aspect, the present invention provides a vehicle (e.g. an aircraft) comprising a liquid storage system for containing a liquid, the liquid storage system being in accordance with the preceding aspect.

In a further aspect, the present invention provides an assembly for reducing the effects of hydrodynamic ram in a liquid in a tank in which it is located. The assembly comprises a plurality of flexible sheets of a material arranged as a stack of sheets, and attachment means for releasably attaching the stack of sheets to an internal surface of the tank. The flexible sheets are made of a material comprising aramid or para-aramid fibres.

### BRIEF DESCRIPTION OF THE DRAWINGS

Figure 1 is a schematic illustration (not to scale) of an exploded view of an example aircraft wing in which an embodiment of a assembly is implemented;
Figure 2 is a schematic illustration (not to scale) showing a cross section through a fuel tank in which an embodiment of a hydrodynamic ram reducing assembly is implemented;
Figure 3 is a schematic illustration (not to scale) illustrating effects of a projectile impacting with an external surface of the fuel tank of Figure 2; and
Figure 4 is a schematic illustration (not to scale) showing a cross section through a fuel tank in which a further embodiment of a hydrodynamic ram reducing assembly is implemented.

### DETAILED DESCRIPTION

In the following description, like reference numerals refer to like elements.

The following description is based on embodiments of the invention and should not be taken as limiting the invention with regard to alternative embodiments that are not explicitly described herein. Structural material types and methods of construction identified are examples only.

It will be appreciated that relative terms such as top and bottom, upper and lower, and so on, are used merely for ease of reference to the Figures, and these terms are not limiting as such, and any two differing directions or positions and so on may be implemented.

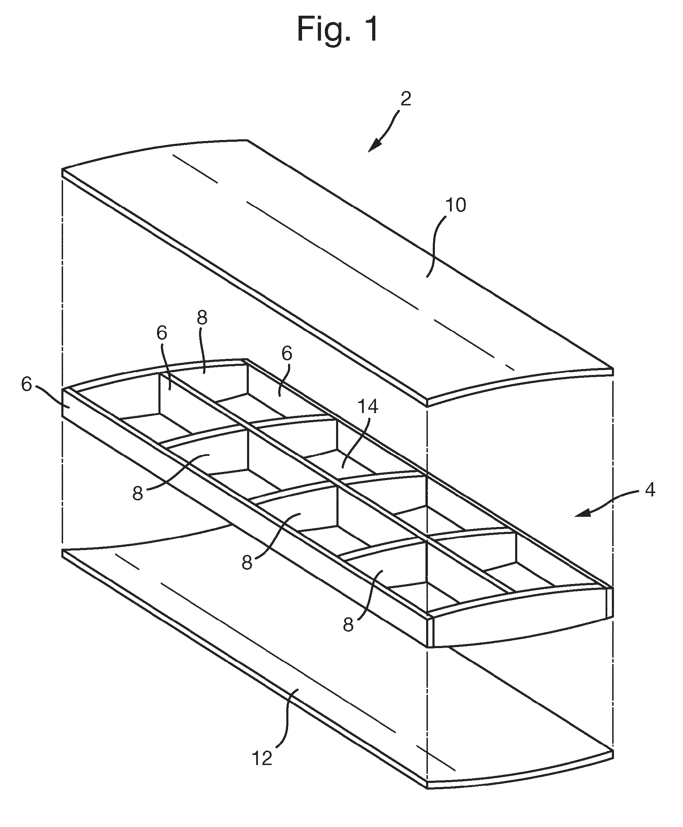

Figure 1 is a schematic illustration (not to scale) of an exploded view of an example aircraft wing 2 in which an embodiment of a hydrodynamic ram reducing assembly is implemented.

The aircraft wing 2 comprises a substructure 4 comprising a plurality of spars 6 and ribs 8. The spars 6 are spaced apart from one another and are aligned along the length of the aircraft wing 2. The spars 6 are coupled together by the spaced apart ribs 8 which are substantially perpendicular to the spars 6. The spars 6 and ribs 8 are connected together by fasteners (not shown in the Figures). The spars 6 and ribs 8 are made of carbon fibre composite (CFC) material, i.e. a composite material comprising a polymer matrix reinforced with carbon fibres. In other examples, the spars 6 and ribs 8 are made of a different appropriate material, for example, aluminium.

The aircraft wing 2 further comprises external skins, namely an upper skin 10 and a lower skin 12. The upper skin 10 comprises a plurality of panels made of CFC material. The upper skin 10 is attached to an upper surface of the substructure 4 by fasteners (not shown in the Figures). The lower skin 12 comprises a plurality of panels made of CFC material. The lower skin 12 is attached to a lower surface of the substructure 4 by fasteners (not shown in the Figures). The external skin 10, 12 may each be, for example, 8mm thick.

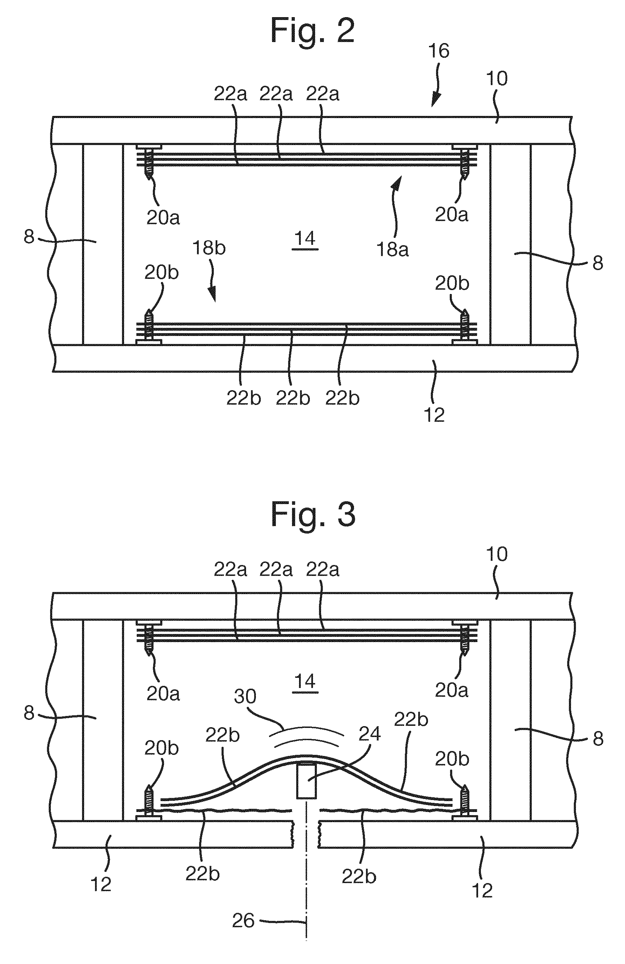

When the substructure 4 and the external skins 10, 12 are attached together (and, for example, bonded with a sealant), a cavity defined by the substructure 4 and skins 10, 12 is formed. Such a cavity is used as a fuel tank for storing aircraft fuel and is indicated in Figure 1 by the reference numeral 14. The fuel tank is described in more detail later below with reference to Figure 2.

The aircraft wing 2 further comprises a leading edge structure, a trailing edge structure and a wing tip structure, which are not shown in Figure 1 for reasons of clarity.

Figure 2 is a schematic illustration (not to scale) showing a cross section through the fuel tank 16 in the aircraft wing 2.

In this embodiment, the outer walls of the fuel tank 16 are provided by spars 6, ribs 8, and the upper and lower skins 10, 12. Aircraft fuel is stored in the cavity 14 defined by the fuel tank outer walls.

In this embodiment, the fuel tank 16 comprises two hydrodynamic ram reducing assemblies or "baffles", hereinafter referred to as "the first assembly" and the "second assembly" and indicated in Figure 2 by the reference numerals 18a and 18b respectively. The first assembly 18a is attached to an internal surface of the upper skin 10, i.e. the surface of the upper skin 10 that is inside the fuel tank 16. The second assembly 18b is disposed on an internal surface of the lower skin 12, i.e. the surface of the lower skin 12 that is inside the fuel tank 16.

In this embodiment, the first assembly 18a comprises a plurality of threaded pins, hereinafter the "first pins" 20a, and a plurality of sheets of material, hereinafter the "first sheets" 22a. Similarly, the second assembly 18b comprises a plurality of threaded pins, hereinafter the "second pins" 20b, and a plurality of sheets of material, hereinafter the "second sheets" 22b.

Each of the pins 20a, 20b comprises a base portion and a threaded elongate member attached to the base portion at one end and extending perpendicularly away from the base portion to a free pointed end. The base portion of each of the first pins 20a is attached to the upper skin 10 by a suitable attachment means, for example an adhesive, such that the elongate members of the first pins 20a are substantially perpendicular to the upper skin 10. Likewise, the base portion of each of the second pins 20b is attached to the lower skin 12 by a suitable attachment means, for example an adhesive, such that the elongate members of the second pins 20b are substantially perpendicular to the lower skin 12.

In this embodiment, the first pins 20a are located at or proximate to the edges of the internal surface of the portion of the upper skin 10 that forms a wall of the fuel tank 16, i.e. at or proximate to the spars 6 and ribs 8. The first sheets 22a are attached to the first pins 20a so as to form a stack of sheets proximate to and substantially parallel with the internal surface of the upper skin 10. Preferably, the first sheets 22a cover substantially the entirety of the portion of the internal surface of the upper skin 10 that defines the fuel tank 16. The first sheets 22a may be attached to the first pins 20a by pushing the first sheets 22a onto the elongate members of the first pins 20a so that the elongate members of the first pins 20a pass through each of the first sheets 22a. The threaded portions of the elongate members of the first pins 20a tend to loosely retain the first sheets 22a on the first pins 20a, i.e. such that the first sheets 22a may be released or detached from the first pins 20a e.g. as described in more detail later below with reference to Figure 3. Preferably, the first sheets 22a are not pulled taught between the first pins 20a, and instead the first sheets 22a are relatively loose, i.e. the intermediate portions of the first sheets 22a between the first pins 20a are free to move (e.g. towards/away from the upper skin 10) at least to some degree. Preferably, there are at least 5 first sheets 22a. More preferably, there are at least 10 first sheets 22a. More preferably, there are at least 20 first sheets 22a, e.g. between 20 and 30 first sheets 22a. In some embodiments, there are more than 30 first sheets 22a.

In this embodiment, the second pins 20b are located at or proximate to the edges of the internal surface of the portion of the lower skin 12 that forms a wall of the fuel tank 16, i.e. at or proximate to the spars 6 and ribs 8. The second sheets 22b are attached to the second pins 20b so as to form a stack of sheets proximate to and substantially parallel with the internal surface of the lower skin 12. Preferably, the second sheets 22b cover substantially the entirety of the portion of the internal surface of the lower skin 12 that defines the fuel tank 16. The second sheets 22b may be attached to the second pins 20b by pushing the second sheets 22b onto the elongate members of the second pins 20b so that the elongate members of the second pins 20b pass through each of the second sheets 22b. The threaded portions of the elongate members of the second pins 20b tends to loosely retain the second sheets 22b on the second pins 20b, i.e. such that the second sheets 22b may be released or detached from the second pins 20b e.g. as described in more detail later below with reference to Figure 3. Preferably, the second sheets 22b are not pulled taught between the second pins 20b, and instead the second sheets 22b are relatively loose, i.e. the intermediate portions of the second sheets 22b between the second pins 20b are free to move (e.g. towards/away from the lower skin 12) at least to some degree. Preferably, there are at least 5 second sheets 22b. More preferably, there are at least 10 second sheets 22b. More preferably, there are at least 20 second sheets 22b, e.g. between 20 and 30 second sheets 22b. In some embodiments, there are more than 30 second sheets 22b.

In this embodiment, the first and second sheets 22a, 22b are flexible sheets made of a fibre-based material, for example woven, crimped/stitched or a mat of fibres. Each of the sheets 22a, 22b is thin, for example, each sheet may have a thickness of between 0.1mm and 0.5mm, for example 0.25mm. Preferably, the sheets 22a, 22b are less than 1mm thick. More preferably, the sheets 22a, 22b are less than 0.5mm thick. Each of the sheets 22a, 22b is made of a tough and strong material such as an aramid or para-aramid synthetic fibre-based material such as poly-paraphenylene terephthalamide (which is more common known as Kevlar(TM)) or Twaron(TM), or UHMWPE fibres (spectra, dyneema).

In this embodiment, the sheets 22a, 22b are substantially continuous. However, in other embodiments, one or more of the sheets is not continuous, for example, one or more of the sheets may include a plurality of perforations, e.g. a sheet may be made of a mesh or net-like material.

Preferably, the size of the components of the assemblies 18 are such that the assemblies 18 occupy less than 15% of the total internal volume (i.e. capacity) of the fuel tank 16. In other embodiments, the assemblies 18 occupy a different proportion of the fuel tank capacity.

As will now be described in more detail, the assemblies 18 are operable to reduce hydrodynamic ram pressure in the fuel contained within the fuel tank 16 resulting from impact of a projectile with an external surface of the fuel tank 16.

Figure 3 is a schematic illustration (not to scale) illustrating effects of a projectile 24 impacting with the lower skin 12 of the fuel tank 16. The path of the projectile through the lower skin 12 is indicated in Figure 3 by the reference numeral 26.

The projectile 24 may be any appropriate projectile or foreign object such as a bullet, warhead fragment, a vehicle part, a rock, a maintenance tool, hail, ice, a bolt, etc. An example projectile has a weight of approximately 3.5g, is substantially spherical in shape having a diameter of approximately 9.5mm, and travels with a velocity of 1500m/s. A further example projectile is a 44g 12.5mm bullet that travels with a velocity of 500m/s.

In this example, the projectile 24 initially impacts with an external surface of the lower skin 12 and travels through the lower skin 12. The projectile 24 causes high strain rate shear damage to the lower skin 12 resulting in a hole in the lower skin 12 approximately the size of the projectile 24.

In this example, after passing through the lower skin 12, the projectile 24 impinges upon one or more of the second sheets 22b. The second sheet or sheets 22b impinged upon by the projectile 24 tend to be deflected and accelerated at least to some extent. The projectile 24 impacting with one or more of the second sheets 22b tends to retard the passage of the projectile 24 into the fuel tank 16. Furthermore, impact kinetic energy of the projectile 24 tends to be used to deflect and accelerate at least one of the second sheets 22b through the fluid in the fuel tank 16, thereby reducing the energy introduced into the fluid directly by the projectile 24.

Deflection of the second sheets 22b by the projectile tends to be facilitated by the second sheets not being taught, i.e. being relatively "loose" and able to move to some degree within the fuel tank 16.

In this example, when travelling through the fuel, the projectile 24 in combination with the second sheets 22b moved by the projectile 24 tends to experience a greater overall drag force from the fluid in the fuel tank 16 compared to that that would be experienced by the projectile 24 if the second sheets 22b were not present. This tends to be at least in part due to the increased surface area of the combination of the projectile 24 and second sheets 20b compared to projectile 24 alone. Thus, the passage of the projectile 24 through the fluid in the fuel tank 16 tends to be retarded.

In some situations, the projectile 24 may travel through (i.e. pierce or penetrate) one or more of the second sheets 22b. In such cases, impact energy of the projectile 24 is used to pierce those second sheets 22b, thereby reducing the energy introduced into the fluid by the projectile 24 and retarding at least to some extent the passage of the projectile 24 into the fluid. The likelihood of the projectile 24 piercing the second sheets 22b may be reduced by making the second sheets 22b from a strong, tough material such as Kevlar(TM).

In some situations, the projectile 24 does not travel through (i.e. does not pierce or penetrate) one or more of the second sheets 22b.

In some cases where the projectile 24 does not pierce one or more of the second sheets 22b, one or more of the second sheets 22b may be detached from one or more of the second pins 20b. In other words, the projectile 24 may "pull" one or more of the second sheets 22b from one or more of the second pins 20b so that those sheets are free to move with the projectile 24. Such detachment of the second sheets 22b from the second pins 20b is facilitated by the second sheets 22b being only loosely retained by the second pins 20b. The second sheets 22b that are detached from the second pins 20b by the projectile 24 advantageously tend to "wrap around" the projectile 24 at least to some extent, for example, due to the movement of the projectile 24 through the fluid in the fuel tank 16. The projectile 24 with one or more of the second sheets coupled thereto tends to have a much larger surface area than the projectile 24 alone. Thus, the projectile 24 with one or more of the second sheets coupled thereto tends to experience a greater drag force when moving through the fluid in the fuel tank 16 compared to that that would be experienced by the projectile 24 alone. Thus, the passage of the projectile 24 through the fluid in the fuel tank 16 tends to be retarded. The retardation of the passage of the projectile 24 through the fluid tends to decrease the likelihood of the projectile 24 impacting with the upper skin 10. Thus, the likelihood of a hole being formed in the upper skin 10 tends to be reduced. Furthermore, the increase in drag on the projectile 24 tends to mean that a greater portion of the impact energy is absorbed by the fluid in the fuel tank 16. Thus, forces exerted on the walls of the fuel tank 16 tend to be reduced.

In some cases where the projectile 24 does not pierce one or more of the second sheets 22b, one or more of the second sheets 22b are not detached from the second pins 20b. Thus, the projectile 24 may be prevented from travelling further into the fuel tank 16. At least some of the impact energy of the projectile 24 tends to be absorbed by the second sheets 22b and the second pins 20b and therefore not transferred to the aircraft substructure 4.

In this example, on impact of the projectile 24 with the fuel tank 16, one or more high pressure shock waves 30 tend to be generated. These shock waves 30 tend to be of lower energy than a shock wave or shock waves experienced in a conventional system due to at least some of the impact energy of the projectile 24 being absorbed by the second assembly 18b. Furthermore, the assemblies tend to disrupt the shockwaves travelling through the fluid in the fuel tank 16 and thereby tend to insulate the upper and lower skins 10, 12 at least to some extent. Thus, pressures resulting from the shock waves 30 exerted on the walls of the fuel tank 16 tend to be lower than the shock wave pressures experienced in conventional fuel tanks. Thus, the likelihood of damage to the walls of the fuels tank 16 (e.g. decoupling of the external skin 10, 12 from the spars 6 or ribs 8) tends to be reduced.

In this example, as the projectile 24 passes through the fluid in the fuel tank 16, a cavitation "wake" may form behind the projectile 24, i.e. a region of low pressure (e.g. a vapour or a vacuum) may form in the wake of the projectile 24. This causes a fluid displacement and an increase in the pressure of the fluid in the fuel tank 16. Due to the passage of the projectile 24 through the fuel tank 16 being retarded at least to some degree by the second sheets 22b, the increased fluid pressure resulting from cavitation caused by the projectile 24 tends to be decreased compared to conventional systems. Thus, pressures resulting from cavitation exerted on the walls of the fuel tank 16 tend to be lower than in conventional systems. Thus, the likelihood of damage to the walls of the fuels tank 16 (e.g. decoupling of the external skin 10, 12 from the spars 6 or ribs 8) tends to be reduced.

Additionally, in this example, the first assembly 18a (which is disposed on the upper skin 10) is located within the fuel tank 16 such that the shock waves 30 resulting from compression of the fluid in the fuel tank 16 resulting from impact of the projectile 24 with the lower skin 12 impinge on the first assembly 18a so that the shock waves 30 interact with the first assembly 18a before impinging on the upper skin 10. The first assembly 18a may reflect incident shock waves at least to some extent. Also, the first assembly 18a tends to be a relatively poor transmitter of impinging shock waves 30. Thus, the amplitude of the shock waves 30 impinging upon the upper skin 10 tends to be reduced and consequently the pressure experienced by the upper skin 10 tends to be diminished by the presence of the first assembly 18a. The assemblies 18a, 18b advantageously tend to decouple the fluid from walls of the fuel tank 16.

Furthermore, were the projectile 24 to continue through the cavity 14 and impact with the first assembly 18a, the first assembly 18a would tend to cause further retardation of the projectile 24, thereby further reducing impact energy and reducing force experienced by at least the upper skin 10.

An advantage provided by the above described assembly is that hydrodynamic ram damage to a fuel tank caused by an object impacting with an external surface of the fuel tank tends to be reduced or eliminated. Hydrodynamic pressures and their associated structural responses tend to be reduced or eliminated. Thus, the likelihood of catastrophic failure of the fuel tank and corresponding aircraft loss tends to be reduced or eliminated.

The above described assembly advantageously tends to be relative easy and cheap to manufacture.

The above described assembly tends to be relatively easy to retrofit to existing aircraft fuel tanks.

The above described assembly tends to provide protection against hydrodynamic ram damage whilst occupying a relatively small amount of the fuel tank's capacity.

The above described assembly tends to be relatively lightweight so as not to be a significant burden to the aircraft.

In the above embodiments, the assemblies are implemented in an aircraft wing fuel tank. However, in other embodiments, the assemblies are used in a different type of container for containing fluid. In some embodiment, one or more walls of the container may be made of a different material to that described above.

In the above embodiments, assemblies are disposed on the internal surfaces of the upper and lower aircraft skins. However, in other embodiments an assembly may be disposed on a different surface of the fuel tank instead of or in addition to one or both of the internal surfaces of the upper and lower aircraft skins. For example, in some embodiments, all internal surfaces of the fuel tank have one or more assemblies attached thereto. In some embodiments, an assembly is only disposed on a single surface of the fuel tank, for example, on only the internal surfaces of the lower aircraft skin.

In the above embodiments, the sheets of the assemblies are attached to the walls of the fuel tank by threaded pins. However, in other embodiments, one or more of the sheets of one or more of the assemblies may be attached to a wall of the fuel tank using a different appropriate attachment means. For example, a pin having one or more barbs arranged to permit the sheets to be pushed onto the pin, but oppose removal of a sheet, may be used. In some embodiments, a fastener that is configured to release the sheets in response to a projectile impact is used. In some embodiments, the sheets may be bonded or adhered to a substructure component (i.e. a spar, rib, or skin) in such a way that the sheet "peels" away and detaches from the substructure component when impact loaded. In other embodiments, sheets have one or more further attachment points spaced across them.

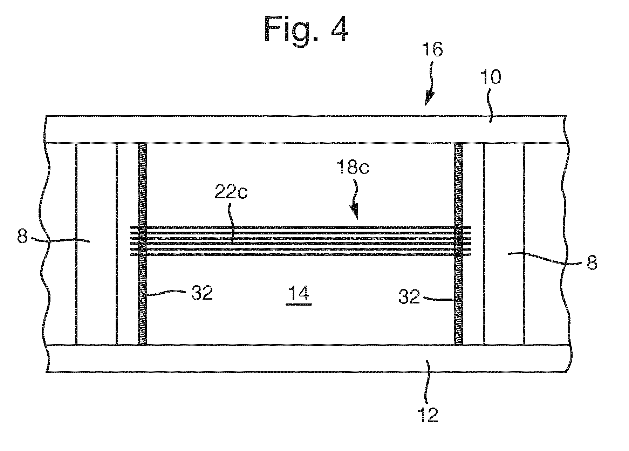

In the above embodiments, each assembly is attached to an internal surface of the fuel tank such that the sheets lie across and proximate to that internal surface. However, in other embodiments, one or more assemblies may be located at a different position within the fuel tank. For example, in some embodiments, an assembly may be located in a "mid-tank" position, for example, such that the sheets of the assembly are remote from the upper and lower skins, e.g. substantially equidistant from and parallel to the upper and lower skins. Figure 4 is a schematic illustration (not to scale) showing a cross section through the fuel tank 16 in which a further embodiment of an assembly, hereinafter referred to as the "third assembly" 18c is implemented. The third assembly comprises a plurality of sheets of material, hereinafter "third sheets" 22c, which are arranged as a stack and are located in the fuel tank substantially equidistant from and parallel to the upper and lower skins 10, 12. The third sheets 22c are loosely retained in position by threaded rods 32 extending between the upper and lower skin 10, 12. In some embodiments, the third sheets may be directly attached to the spars 6 or ribs 8 e.g. using an adhesive.

In some embodiments, the stack of sheets of an assembly may be enclosed in a container (such as a sealed bag which may be made of a liquid impermeable material such as a plastic). This advantageously tends to facilitate fitting of the assembly into the fuel tank. Furthermore, this advantageously tends to prevent or oppose contamination of the fuel within the fuel tank with contaminants that may be present in or on the sheets (e.g. water). Furthermore, this advantageously tends to prevent or oppose the sheets of the assembly becoming saturated with fuel in the fuel tank.

## Claims

1. A liquid storage system comprising:
a tank (16) for containing a liquid, said tank (16) enclosing a liquid storage space (14); and
an assembly (18a, 18b) located within the tank (16) and configured to reduce the effects of hydrodynamic ram within the tank (16), the assembly (18a, 18b) comprising:
a plurality of flexible sheets (22a, 22b) of a material arranged as a stack of sheets; and
attachment means (20a, 20b) for releasably attaching the stack of sheets (22a, 22b) to an internal surface of the tank (16).

2. A system according to claim 1, one or more of the flexible sheets (22a, 22b) is made of a material comprising aramid or para-aramid fibres.

3. A system according to claim 2, wherein the aramid or para-aramid fibres are poly-paraphenylene terephthalamide.

4. A system according to any of claims 1 to 3, wherein each of the flexible sheets (22a, 22b) has a thickness of less than 1 mm.

5. A system according to claim 4, wherein each of the flexible sheets (22a, 22b) has a thickness of less than 0.5mm.

6. A system according to any of claims 1 to 5, wherein the assembly (18a, 18b) includes at least 20 flexible sheets (22a, 22b).

7. A system according to any of claims 1 to 6, wherein the attachment means (20a, 20b) comprises one or more pins, each pin comprising a base portion for attachment to an internal surface of a wall of the tank, and a threaded elongate member passing through the plurality of flexible sheets (22a, 22b).

8. A system according to any of claims 1 to 7, wherein the total cavity volume of the assembly (18a, 18b) in the tank (16) is less than or equal to 15% by volume of the tank volume.

9. A system according to any of claims 1 to 8, wherein the assembly (18a, 18b) is arranged in the tank (16) such that the plurality of flexible sheets (22a, 22b) is proximate to and substantially parallel with an internal surface of a wall of the tank (16).

10. A system according to any of claims 1 to 8, wherein the assembly (18a, 18b) is arranged in the tank (16) such that the stack of flexible sheets (22a, 22b) is substantially equidistant from two opposite walls of the tank (16).

11. A system according to any of claims 1 to 10, wherein the assembly (18a, 18b) is configured such that at least part of a sheet (22a, 22b) becomes detached from the wall of the tank (16) in response to the application of a load force to that sheet (22a, 22b).

12. A system according to any of claims 1 to 11, wherein the assembly (18a, 18b) is configured such that the sheets (22a, 22b) are free to move at least to some extent within the tank (16) relative to each other and with respect to the walls of the tank (16) without becoming detached from the walls of the tank (16).

13. A system according to any of claims 1 to 12, wherein the tank (16) is an aircraft fuel tank.

14. A vehicle comprising a liquid storage system for containing a liquid, the liquid storage system being in accordance with any of claims 1 to 13.

15. An assembly (18a, 18b) for reducing the effects of hydrodynamic ram in a liquid in a tank (16) in which it is located, the assembly (18a, 18b) comprising:
a plurality of flexible sheets (22a, 22b) of a material arranged as a stack of sheets; and
attachment means (20a, 20b) for releasably attaching the stack of sheets (22a, 22b) to an internal surface of the tank (16); wherein
the flexible sheets (22a, 22b) are made of a material comprising aramid or para-aramid fibres.
